(19) **Europäisches Patentamt European Patent Office Office européen des brevets**

(11) **EP 4 570 953 B1**

(12) **EUROPEAN PATENT SPECIFICATION**

(45) Date of publication and mention
of the grant of the patent:
**10.06.2026 Bulletin 2026/24**

(21) Application number: **23217083.7**

(22) Date of filing: **15.12.2023**

(51) International Patent Classification (IPC):
*C25B 1/04* (2021.01)     *C25B 9/65* (2021.01)
*C25B 9/75* (2021.01)     *C25B 9/77* (2021.01)
*H01M 8/0232* (2016.01)     *H01M 8/0245* (2016.01)
*B32B 3/26* (2006.01)     *B32B 15/04* (2006.01)
*B32B 15/18* (2006.01)     *H01M 8/10* (2016.01)

(52) Cooperative Patent Classification (CPC):
**C25B 1/04; B32B 3/266; B32B 15/043;
B32B 15/18; C25B 9/65; C25B 9/75; C25B 9/77;
H01M 8/0232; H01M 8/0245;** B32B 2250/02;
B32B 2250/03; B32B 2307/7376; H01M 2008/1095;
Y02E 60/50

(54) **POROUS TRANSPORT MULTILAYERS**

PORÖSE TRANSPORTMEHRSCHICHTEN

MULTICOUCHES DE TRANSPORT POREUSES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.06.2025 Bulletin 2025/25**

(73) Proprietor: **Sungrow Deutschland GmbH
81541 München (DE)**

(72) Inventors:
• **Garcia Torregrosa, Ivan
81541 Munich (DE)**
• **Liu, Fang
81541 Munich (DE)**

(74) Representative: **Müller-Boré & Partner
Patentanwälte PartG mbB
Friedenheimer Brücke 21
80639 München (DE)**

(56) References cited:
**EP-A- 3 258 524     EP-A1- 3 339 478
EP-A1- 3 346 027     DE-A1- 102018 105 115
US-A1- 2016 049 677**

**Description**

The present invention relates to a laminate of multiple perforated layers each having a two-dimensional periodic structure of openings with said openings having different dimensions. Moreover, the present invention relates to an assembly comprising a bipolar plate and the laminate according to the present invention as well as an electrochemical apparatus comprising the laminate or the assembly according to the present invention.

Proton exchange membrane water electrolyzer (PEMWE) systems are emerging in recent years as a very promising alternative to produce green hydrogen (using renewable energy sources) with high efficiency. However, the high contents of Ir and Pt precious metals that are needed to carry out the electrochemical reactions in a PEMWE limit the market penetration and scalability of the technology. A state of the art PEMWE needs roughly 300 Kg of Ir per each GW of installed systems, which translates to approximately 1.5 $mg_{Ir}/cm^2$ of active area. Considering the global production of Ir in 2020 being around 8 metric tons, a realistic limit of installed capacity per year would be lower than 10 GW. Current efforts in the scientific community are focused on alternative oxygen evolution catalysts (OER) capable of withstanding the extreme oxidative conditions at the anodic compartment of a PEMWE. However, recent publications in scientific literature demonstrate that the utilization of Ir catalyst in state of the art PEMWE is lower than 5 %, meaning that with proper optimization of the catalyst layer and its interface with the porous transport layer (PTL) the content of Ir could be decreased 20-fold without affecting the performance or durability of the cell stack.

There exist multiple drawbacks in the technology in state of the art PEMWEs and PEM fuel cells (PEMFCs). Namely, there should be decreased the Ir content below 0.5 $mg/cm^2$, increased the stack performance by reducing interface ohmic resistance, increased the mechanical stability of the membrane and allowing for thinner membranes, and decreased the overall cost of the stack e.g. by removing the need for protective coatings at the anodic side of the bipolar plate (BPP), or by reducing the cost of the anodic PTL component. However, so far, insufficient solutions have been available for solving said drawbacks.

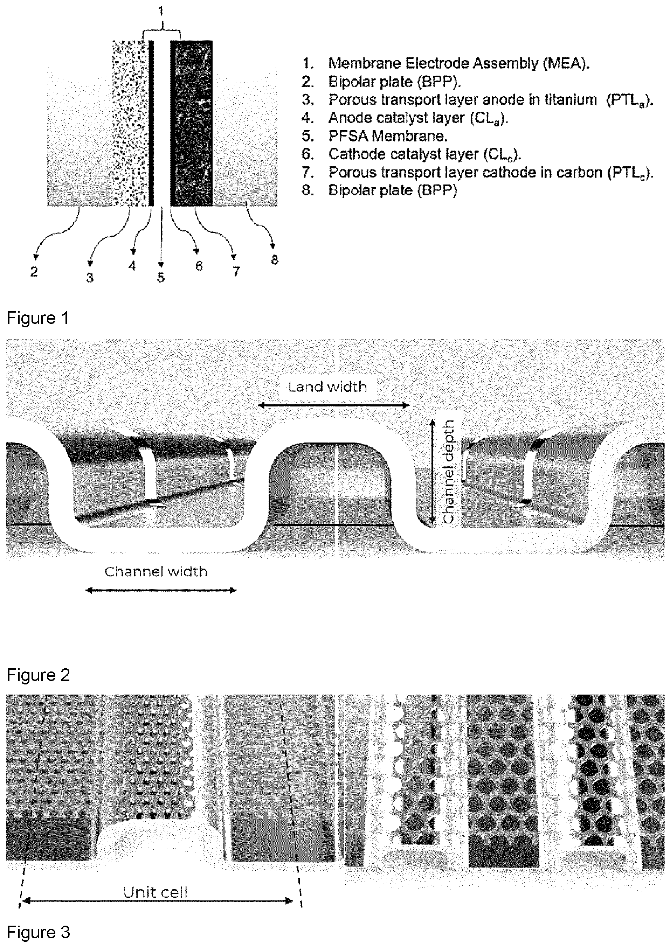

Figure 1 shows the cross section of a single cell PEMWE. One of the main issues with PEMWE technology resides in the extreme oxidative conditions that take place at the anode. Typical half potentials at the anode vary from 1.5 to 1.9 V. Additionally, the presence of high concentrations of $O_2$ in solution lead to very strong anodization and formation of nonconductive oxides unless protective coatings of noble metals are used. For that reason, BPPs are commonly coated with Pt or Au, while the anodic PTL is typically coated with Pt or Ir as Au is prone to dissolution in direct contact with the anodic catalyst layer.

The PTL is a critical component that has several functions acting as electron collector, water and gas diffusion media, and providing mechanical stability to the polymer membrane. The mechanical function is related to the relative operating pressure at both electrodes. Commercial PEMWE can operate at differential pressures with 20 or 30 bars at the cathode being commonly used in demonstration units. Though two main types of commercial PTLs can be found in PEMWE systems, i.e. titanium particle sintered PTL and a titanium fiber sintered PTL. The higher open porosity of the titanium fiber PTL (57% - 70%) makes it the preferred choice due to better performance, especially at higher current densities. The typical dimensions of the titanium fibers are 20 to 50 $\mu$m in diameter and up to 1000 $\mu$m in length. However, the random orientation characteristic of titanium felts leads to very poor control on the interfacial properties between the PTL and the catalyst layer. The mechanical properties of Nafion and reinforced Nafion-based membranes must be enough to withstand the operating pressures (up to 30 bars) and they are prone to deformation and puncturing. Here, the geometry of the PTL plays a very important role as large voids of several hundred microns in diameter can be found randomly distributed along the surface. This issue is especially important when the thickness for the membrane is much lower than the largest pore dimension. Ideally, the open porosity of the PTL should prevent excessive deformation of the membrane under high pressure operation. However, the random fiber orientation and distribution intrinsic in titanium felts make it very complex to safely employ thinner membranes.

To avoid cell degradation due to oxidation of titanium components, PTLs are typically coated with 200 - 400 nm Pt or Ir. The protective coatings are needed only at the interface of the BPP/PTL and PTL/catalyst layer. However, due to the nature of the porous component it is common to find Pt or Ir covering areas that do not participate in the electron transport phenomena such as the bulk of the PTL. This excess waste can represent up to 70% - 80% of the total amount of precious metal used in the process and it is an important source of added costs. Certain deposition processes which require line of sight, such as magnetron sputtering can, to some extent limit the waste of expensive Pt but more research on the durability of such coatings must be performed.

The conductivity of the catalyst layers (CL) on both sides of the membrane is orders of magnitude lower than that of titanium. Experimental data showed that the areas of the catalyst layer which are not in direct contact with the titanium PTL do not actively participate in the electrochemical reaction. The low intrinsic conductivity of the CL leads to poor in-plane electron transport and strategies must be met in order to improve the catalyst utilization. The typical thickness of an anodic catalyst layer varies from 5 to 9 $\mu$m and the typical diameter of the titanium fibers employed in commercial titanium felts ranges from 20 to 50 $\mu$m. Upon cell assembly and operation, the membrane and the CL deform leading to areas of non-active catalyst. As mentioned above, the areas of the CL far from the vicinity of the titanium fiber are electrically isolated. At the same time, the areas of the CL directly in contact with the center of the titanium fibers have limited access to the reactant (water) and the produced oxygen gas can't be effectively removed. The are various studies ongoing for exploring different routes to enhance the PTL/CL interface by the addition of a microporous layer (MPL) that acts as a buffer area of 20 to 50 μm in thickness with smaller pores (5 to 10 μm) and lower porosity (up to 40 %). However, such strategies lead to higher material and process costs while rendering relatively small improvements in performance.

The interface between the PTL and the BPP in PEMWEs has been studied in detail during the last decade. When kept unprotected, the titanium BPP forms a passivating oxide layer over time (most noticeable during the first 24 hours of operation and continues growing for several thousands of hours) that accounts for up to 60 mV overvoltage at the single cell level. Those 60 mV translate to roughly 10 % decrease in efficiency during the lifetime of the PEMWE stack. When coated with Pt, the PTL/BPP interface shows an average resistance of 5-10 mΩ and remains very stable during prolonged operation. In addition to electrical conductivity, thermal conductivity plays an important role in the current distribution along the area of the catalyst layer. Therefore, another important parameter to consider is the thermal conductivity at the PTL/BPP interface. The need for expensive Pt coatings to keep the ohmic resistance below 10 mΩ at the interface leads to added costs that in some cases exceed the cost of the BPP itself.

In addition to the aforementioned limitations, the fabrication of sintered titanium felts is an energy intensive and very slow process with multiple steps and special atmospheric conditions to prevent oxidation. The cost contribution of the anodic PTL to the overall cost of the PEMWE stack varies from 15% to 22%, being the second most expensive component after the catalyst coated membrane (CCM) with 40% to 47%.

In summary, current state of the art titanium PTLs employed in PEMWE are not optimized for the demanding requirements and alternatives based on simpler and sinter-free processes are needed to bring down the stack cost and precious metal contents both in the anodic catalyst layer and the BPP.

One recent development in PTL technology concerned the change from a three-dimensional porous structure, as the titanium felts, to a more simplistic two dimensional design of perforated titanium sheets. The electrochemical results demonstrated a decrease of the overpotential by 100 mV when compared to the state of the art PTL based on sintered titanium fibers. For example, DE 10 2018 105 115 A1 discloses an electrolyzer system with a support element that is constructed from multiple metal meshes with different porosities and pore sizes, arranged in a laminate. The layers exhibit two-dimensional periodic structures of openings, and the document describes how the thickness, pore size, and spacing can be varied between layers to optimise gas transport and mechanical stability.

However, several problems with said concept in actual PEMWE systems have been conceived. For example, the fabrication process involves a complex lithography step followed by hydrofluoric acid etching that leads to important chemical waste treatment. In addition, it is a relatively slow process. Moreover, the resulting perforated sheets were very brittle and difficult to handle without breaking. The intrinsic mechanical instability makes this PTL concept not usable for cells operating at differential pressure. The flow field geometry of the bipolar plate is very limited as the lateral diffusion of water and gas at the interface PTL/BPP is very low. The surface of the 2D sheets is very flat and with low hydrophilicity leading to even lower diffusion of water and oxygen gas.

Thus, the technical problem underlying the present invention is to provide means for solving current drawbacks suffering in the technology in state of the art PEMWEs.

The solution to the above technical problem is achieved by the embodiments characterized in the claims.

In particular, the present invention relates to a laminate comprising a first perforated layer (11) and a second perforated layer (12) on the first perforated layer (11), wherein each of the first perforated layer (11) and the second perforated layer (12) has a two-dimensional periodic structure of openings, and

a first thickness (T1), a first maximum opening dimension (D1), and a first opening distance (S1) of the first perforated layer (11) and a second maximum opening dimension (D2) and a second opening distance (S2) of the second perforated layer (12) fulfil the following inequalities (I-1) to (I-5),

$$D1 \geq T1 \qquad (I\text{-}1);$$

$$D1 \geq S2 \qquad (I\text{-}2);$$

$$S1 \leq (2/3) \times D1 \qquad (I\text{-}3);$$

$$D2 \geq 5 \times D1 \qquad (I\text{-}4);$$

and

$$S2 \leq (1/3) \times D2 \qquad (I\text{-}5).$$

With the present invention, it is possible to provide a laminate of perforated layers which is able to balance the requirements of the PTL/BPP interface with those of the PTL/CL interface. One of the characteristics that make PEM electrolyzers fundamentally different from PEM fuel cells is the nature of the electrochemical reactants. While for fuel cells both reactants and products are in the same gas phase (although water condensation can take place at the anodic compartment), the products in the water electrolyzer are gases ($O_2$ and $H_2$) but the reactant is water in liquid phase. This mixture of liquid and gas is specifically important at the anodic compartment where the water molecules must reach the catalytic sites efficiently. Being a two-phase system, bipolar plates in PEM electrolyzers require special attention to the geometry of the flow field and design characteristics. The image of Figure 2 shows a cross-section of a typical bipolar plate indicating the main parameters that define the geometry of the flow field.

The three most important dimensions in the flow field that are going to define the flow distribution affecting the cell performance and durability are the channel depth, the channel width, and the land width. Large channel widths beyond 2 mm may negatively affect the performance due to poor contact between the PTL and the CL. At the same time, the channel depth and in general the channel cross-sectional area have an impact on the flow dynamics and bubble accumulation. The land width also influences the lateral diffusion of gas and liquid given that the PTL is situated between the CL and the BPP. For that reason, large land widths would require thicker PTLs with very high open porosity to enhance the lateral flow. Accordingly, when aiming to use the whole catalyst layer surface, it would be necessary to use very short land widths. This is further clarified Figure 3.

For a 2D PTL with small openings in the order of 100 $\mu$m in diameter and a BPP with a land width of 1.5 mm as shown in the left part of Figure 3, about 30 % of the openings are blocked to water as there is almost no lateral diffusion between the BPP and the PTL. When the diameter of the openings is enlarged to 300 or 400 $\mu$m as in the right part of Figure 3, the lateral diffusion improves at the expense of contact area between the PTL and the CL. The active contact area is the key parameter determining the efficiency of the process and leading to improved catalyst utilization.

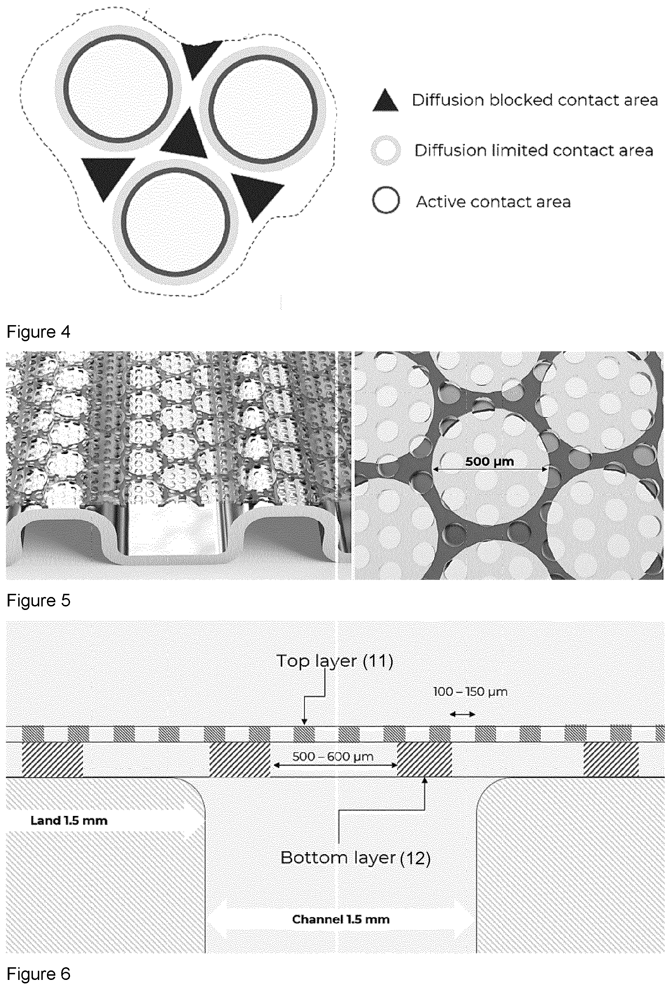

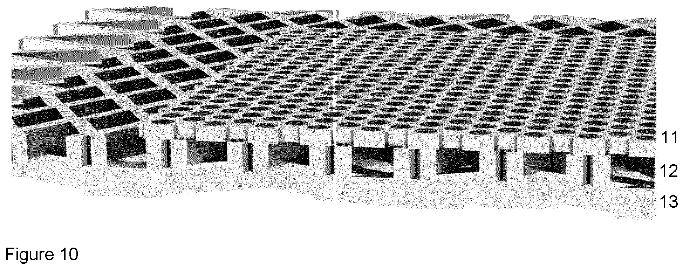

The catalyst layer at the anode is mainly comprised of two distinct components. Ir or $IrO_2$ nanoparticles with average particle size of 10 - 20 nm act as catalyst and also as electron conducting path. Nafion dispersions are polymer aggregates with dimensions up to 500 nm that act as binder and proton conducting media. In addition, porosity is a very important part of the catalyst layer which allows mass transfer. The ratio between catalyst, polymer and porosity will determine the efficiency of the reaction. Typical lateral electron resistances in anodic CLs range from 100 to 1000 $\Omega$. That lateral resistance to the electron flow has a direct influence on the catalyst utilization within the CL. Several studies have tried to deal with the complex task of measuring the active area of a catalyst layer and it can be concluded that the electron flow can reach up to 10 $\mu$m in the lateral direction from the direct contact with the titanium PTL. To clarify the meaning of the implications of such low conductivity of the catalyst layer, it is referred to Figure 10 of a publication of Kang et al. (cf. Electrochimica Acta 255 (2017) 405-416). Figures 10b, 10c, 10d and 10e of said publication represent a 2D PTL with a diameter of 50 $\mu$m in direct contact with the catalyst layer and with in-plane resistivities of $1.52 \cdot 10^{-2}$ $\Omega \cdot$m, $1.52 \cdot 10^{-3}$ $\Omega \cdot$m, $1.52 \cdot 10^{-4}$ $\Omega \cdot$m and $1.52 \cdot 10^{-5}$ $\Omega \cdot$m, respectively. The current mapping in each case is represented in red when the cell is subjected to a current density of 2 A/cm$^2$. The lateral conductivity of a commercial catalyst layer will be closer to the cases presented in Figures 10c and 10d of the above-mentioned publication, wherein most of the area of the CL not being in contact with the 2D PTL remains inactive leading to a very low catalyst utilization. For clarifying what is considered as active contact area, it is referred to Figure 4 showing a unit cell of a 2D PTL indicating the areas that contribute to the current generation. There can be distinguished three main areas where the catalyst activity will be appended to the diffusivity of oxygen and water between the CL and the PTL. Those areas far from the border of the openings can be considered as inert or fully blocked for water and gas. Then, the first 20 or 30 $\mu$m surrounding each opening will have limited reactant and product diffusivity. Finally, the active contact area could be defined as the surface of the PTL in direct contact with the CL and also with full access to reactant. This is also known as the triple phase boundary (TPB) as solids, gases and liquids are present.

As described herein, with decreasing pore diameter and porosity of the PTL at the PTL/CL interface it is possible to increase and preferably maximize the active contact area of the CL, while the opposite is true for the PTL/BPP interface. The lateral diffusion of gas and water at the BPP/PTL interface is increased and preferably maximized by increasing porosity and pore diameters of the PTL at the BPP/PTL interface. In the present invention, there are stacked multiple 2D perforated layers with defined dimensions for obtaining a PTL (laminate), which allows to balance the requirements of a PTL/BPP interface with those of a PTL/CL interface.

An exemplary laminate having two perforated layers is depicted in Figure 5. Said laminate or multilayer PTL comprises a top layer (to be in direct contact with the catalyst layer), with 50% porosity and an average opening diameter of 100 $\mu$m, and a bottom layer with 70% porosity and an average opening diameter of 500 $\mu$m. On the right of Figure 5 is a magnification of the same multilayer PTL where the distribution of openings can be estimated. Following the example above, the cross-sectional sketch depicted in Figure 6 serves as an example of preferable PTL design for a given BPP with flow field determined by a land width of 1.5 mm and a channel width of 1.5mm. From Figure 6 it can be easily estimated that most of the small openings at the top layer should benefit from the improved transient of water and oxygen from and to the channels respectively.

Furthermore, the laminate of the present invention preferably has a high mechanical stability of the PTL.

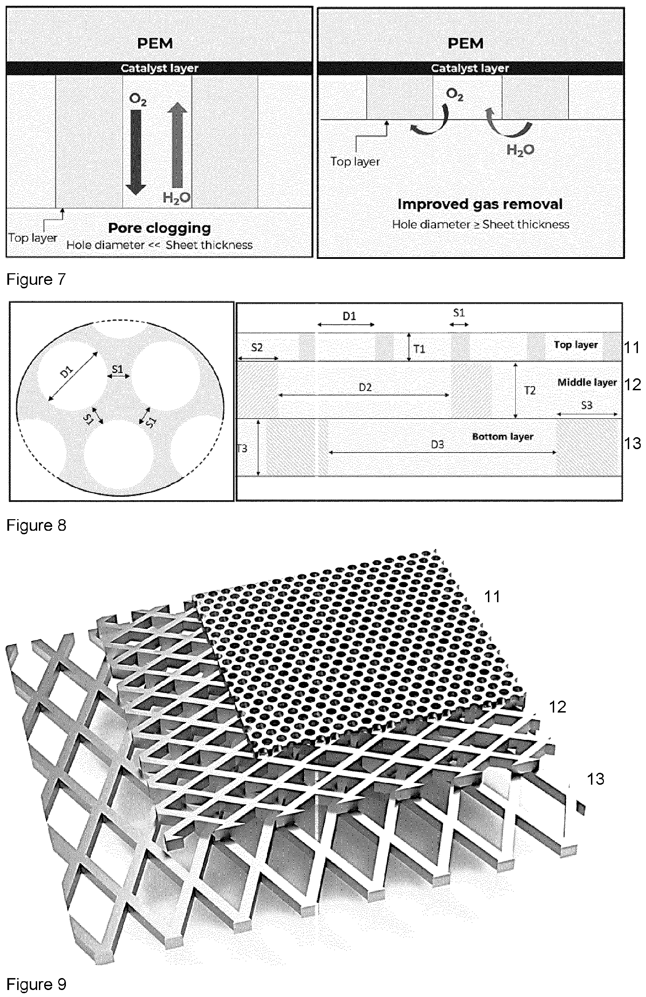

As described above, PEMWE systems are commonly operated under differential pressures (beyond 20 bars). It is therefore necessary to consider the mechanical requirements of the PTL given that even small deviations in pressure could lead to permanent deformation and premature failure of the PEMWE stack. Although increasing the thickness of the perforated layer in direct contact with the CL can be considered, an overly high thickness of the same layer could lead to an opening clogging due to gas accumulation. Figure 7 illustrates the possible influence of layer thickness on gas removal.

According to the present invention, the laminate comprises a first perforated layer (11) and a second perforated layer (12) on the first perforated layer (11). The term "laminate" means herein that multiple perforated layers are stacked on each other, preferably physically bonded by welding (e.g. diffusion welding or resistance welding) giving a single component. The laminate is preferably a porous transport layer (laminate). The number of perforated layers is at least two and may be from 2 to 6, preferably from 2 to 4, more preferably 2 or 3.

The term "opening" means herein that the perforated layers are open from one major surface to the other opposite major surface of the respective perforated layer by said openings. Accordingly, said openings may also be considered as through-holes between the major surfaces of a perforated layer. Respective openings are depicted for example in Figures 3 to 10. The shape of the openings is not particularly limited. For example, the shape of the openings may independently be circular, elliptic, triangular, rectangular, squared rhombic, or may have other polygonal two-dimensional shapes. The shape of the openings may be the same or differ between the perforated layers. For example, the first perforated layer may have one opening shape, preferably a circular shape, and the second perforated layer and any further perforated layers may have the same or another opening shape, e.g. each a rhombic shape, with different dimensions.

The term "two-dimensional periodic structure of openings" means herein that the openings form a periodic structure which extends two-dimensionally perpendicular to the thickness direction of the perforated layer. Respective structures are depicted for example in Figures 3, 5, 9, and 10. The perforated layers have different two-dimensional periodic structures of openings.

Each of the perforated layers has a thickness (T), a maximum opening dimension (D), an opening distance (S), and an open porosity (O). The thickness (T) extends between the two major surfaces of the respective perforated layer. The maximum opening dimension corresponds to the maximum dimension (e.g. maximum diameter) of the openings of the respective perforated layer. For openings having a single diameter, such as circles, said diameter corresponds to the maximum opening dimension (D). Openings being differently shaped, such as rhombic or elliptic, have different diameters. In this case, the maximum opening dimension (D) corresponds to the maximum dimension/diameter of the opening. A minimum opening dimension ($D_{min}$) corresponds to the minimum dimension/diameter of the opening. The opening distance (S) corresponds to the average distance between adjacent openings. The open porosity (O) is defined as the ratio of the apparent area of the openings to the apparent area of the perforated layer. Figures 8 to 10 schematically illustrate the geometries of different perforated layers in an exemplary three-layer laminate.

In case two or more perforated layers have openings with different dimensions, the respective two-dimensional periodic structure of openings may be arranged such that the maximum opening dimensions are arranged in any possible way, preferably parallel or perpendicular, to each other. Preferably, the maximum opening dimensions are arranged perpendicular to each other. A respective exemplary arrangement is depicted in Figures 9 and 10, wherein the bottom layer maximum opening dimension is perpendicular to the middle layer maximum opening dimension. When assembled with a BPP, the bottom layer maximum opening dimension is preferably perpendicular to BPP land and channel (extension direction), whereas the middle layer maximum opening dimension is preferably parallel to BPP land and channel (extension direction).

According to the present invention, the first thickness (T1), a first maximum opening dimension (D1), and a first opening distance (S1) of the first perforated layer (11) and a second maximum opening dimension (D2) and a second opening distance (S2) of the second perforated layer (12) fulfil the following inequalities (1-1) to (I-5):

$$D1 \geq T1 \qquad (I\text{-}1);$$

$$D1 \geq S2 \qquad (I\text{-}2);$$

$$S1 \leq (2/3) \times D1 \qquad (I\text{-}3);$$

$$D2 \geq 5 \times D1 \qquad (I\text{-}4);$$

and

$$S2 \leq (1/3) \times D2 \qquad (I\text{-}5).$$

The laminate may comprise further perforated layers in addition to the first perforated layer (11) and the second perforated layer (12). For example, the laminate may further comprise a third perforated layer (13) on the second perforated layer (12), wherein the third perforated layer (13) has a two-dimensional periodic structure of openings, and the second maximum opening dimension (D2) of the second perforated layer (12) and a third maximum opening dimension (D3) and a third opening distance (S3) of the third perforated layer (13) fulfil the following inequalities (I-6) to (I-8):

$$D2 \geq 3 \times S3 \qquad \text{(I-6)};$$

$$S3 \leq (1/4) \times D3 \qquad \text{(I-7)};$$

and

$$D3 \geq 1.5 \times D2 \qquad \text{(I-8)}.$$

The laminate may comprise more than three perforated layers, wherein the further perforated layers are consecutively provided on the third perforated layer. The further perforated layers each have a two-dimensional periodic structure of openings, wherein the following inequalities (I-9) to (I-11) are fulfilled:

$$D(n-1) \geq 3 \times Sn \qquad \text{(I-9)};$$

$$Sn \leq (1/4) \times Dn \qquad \text{(I-10)};$$

and

$$Dn \geq 1.5 \times D(n-1) \qquad \text{(I-11)}.$$

In the above inequalities, n represents the total number of perforated layers, D(n-1) represents the maximum opening dimension of the $(n-1)^{th}$ perforated layer, Dn represents the maximum opening dimension of $n^{th}$ perforated layer, and Sn represents the opening distance of $n^{th}$ perforated layer.

The first thickness (T1) of the first perforated layer (11) may be from 25 $\mu$m to 200 $\mu$m, preferably from 50 $\mu$m to 100 $\mu$m. A second thickness (T2) of the second perforated layer (12) may be from 50 $\mu$m to 250 $\mu$m, preferably from 100 $\mu$m to 200 $\mu$m. In case the laminate comprises three or more perforated layers, a third thickness (T3) of the third perforated layer (13) may be from 100 $\mu$m to 500 $\mu$m, preferably from 150 $\mu$m to 300 $\mu$m. The thicknesses of the optional further perforated layers may each independently be from 100 $\mu$m to 500 $\mu$m, preferably from 150 $\mu$m to 300 $\mu$m. The third perforated layer is not thinner than the second perforated layer. The total thickness of the laminate is preferably at least 200 $\mu$m.

The first perforated layer (11) may have a first open porosity (O1) of from 30% to 70%, preferably from 40% to 60%. The second perforated layer (12) may have a second open porosity (O2) of from 50% to 90%, preferably from 60% to 80%. In case the laminate comprises three or more perforated layers, the third perforated layer (13) may have a third open porosity (O3) of 60% to 90%, preferably from 70% to 80%. The open porosities of the optional further perforated layers may each independently be from 70% to 90%, preferably from 80% to 90%. Preferably, the open porosity increases from the first perforated layer to the perforated layer, which is opposite of the first perforated layer.

The first maximum opening dimension (D1) of the first perforated layer (11) may be from 30 $\mu$m to 300 $\mu$m, preferably from 50 $\mu$m to 200 $\mu$m, most preferably from 70 $\mu$m to 140 $\mu$m. The second maximum opening dimension (D2) of the second perforated layer (12) may be from 400 $\mu$m to 1500 $\mu$m, preferably from 500 $\mu$m to 1000 $\mu$m, most preferably from 550 $\mu$m to 700 $\mu$m. In case the laminate comprises three or more perforated layers, the third maximum opening dimension (D3) of the third perforated layer (13) may be from 600 $\mu$m to 2300 $\mu$m, preferably from 900 $\mu$m to 1500 $\mu$m. The maximum opening dimensions of the optional further perforated layers may each independently be from 600 $\mu$m to 2300 $\mu$m, preferably from 900 $\mu$m to 1500 $\mu$m. Preferably, the maximum opening dimension increases from the first perforated layer to the perforated layer, which is opposite of the first perforated layer.

In case of non-uniform dimensions of the opening, a first minimum opening dimension ($D_{min}1$) of the first perforated layer (11) may be from 15 $\mu$m to 150 $\mu$m, preferably from 20 $\mu$m to 90 $\mu$m, most preferably from 30 $\mu$m to 60 $\mu$m. A second minimum opening dimension ($D_{min}2$) of the second perforated layer (12) may be from 200 $\mu$m to 550 $\mu$m, preferably from 300 $\mu$m to 500 $\mu$m, most preferably from 350 $\mu$m to 450 $\mu$m. In case the laminate comprises three or more perforated layers, the third minimum opening dimension ($D_{min}3$) of the third perforated layer (13) may be from 400 $\mu$m to 1200 $\mu$m, preferably from 500 $\mu$m to 1100 $\mu$m, most preferably from 600 $\mu$m to 1000 $\mu$m. Minimum opening dimensions of the optional further perforated layers may each independently be from 400 $\mu$m to 1200 $\mu$m, preferably from 500 $\mu$m to 1100 $\mu$m, most preferably from 600 $\mu$m to 1100 $\mu$m.

The first opening distance (S1) of the first perforated layer (11) may be from 20 $\mu$m to 100 $\mu$m, preferably from 50 $\mu$m to 80 $\mu$m, most preferably from 60 $\mu$m to 70 $\mu$m. The second opening distance (S2) of the second perforated layer (12) may be from 30 $\mu$m to 120 $\mu$m, preferably from 85 $\mu$m to 115 $\mu$m, most preferably from 90 $\mu$m to 110 $\mu$m. In case the laminate comprises three or more perforated layers, the third opening distance (S3) of the third perforated layer (13) may be from 100 $\mu$m to 500 $\mu$m, preferably from 140 $\mu$m to 350 $\mu$m. The opening distances of the optional further perforated layers may each independently be from 100 $\mu$m to 500 $\mu$m, preferably from 140 $\mu$m to 350 $\mu$m.

The perforated layers can for example be perforated titanium sheets, perforated stainless steel sheets, and perforated nickel-based sheets. The perforated layers are preferably perforated titanium sheets. Methods for preparing the respective sheets are known in the art. For example, the sheets can be prepared by photolithography, etching, stamping, expanded sheet processing, and laser micro-perforation. The different perforated layers may be manufactured by different methods. For example, the first perforated layer may be obtained by laser perforation or laser drilling and the other perforated layers may be obtained by laser perforation, laser drilling, or expanded sheet processing.

The perforated layers can be further processed as necessary. For example, the perforated layers can be surface treated, e.g. by providing a protective coating against oxidation, e.g. on the first perforated layer and the perforated layer, which is opposite of the first perforated layer, preferably, if at all, only on the first perforated layer.

The individual layers can be combined, for example, by bonding or welding. Preferably, the resistance between the perforated layers is the same as the resistance of bulk titanium as there is no physical interface. The electrical conductivity is preferably similar to that of bulk titanium. Preferably, resistance welding or diffusion welding is applied for the welding process.

A further aspect of the present invention relates to a method for producing the laminate of the present invention. The above definitions and embodiments apply analogously for this aspect of the present invention. The following definitions and embodiments apply likewise analogously for the other aspects of the invention.

For example, the method may involve the step of providing at least two perforated layers (i.e. at least the first perforated layer and the second perforated layer and optionally further perforated layers) and the step of combining the different layers by stacking and welding. Methods for providing the perforated layer and for welding are described above.

A further aspect of the present invention relates to an assembly comprising a bipolar plate and the laminate according to the present invention on the bipolar plate, wherein the perforated layer, which is opposite of the first perforated layer, is contacting the bipolar plate. The above definitions and embodiments apply analogously for this aspect of the present invention. The following definitions and embodiments apply likewise analogously for the other aspects of the invention.

The perforated layer, which is opposite of the first perforated layer and which is contacting the bipolar plate, has a large maximum opening dimension (Dx). This preferably allows to secure mass transport along the interface BPP-PTL. In a two-layer laminate, the perforated layer in contact with the bipolar plate is the second perforated layer. In this case, Dx corresponds to D2. In a three-layer laminate, the perforated layer in contact with the bipolar plate is the third perforated layer. In this case, Dx corresponds to D3.

The land width (LW) of the bipolar plate and the maximum opening dimension (Dx) of the perforated layer, which is opposite of the first perforated layer, preferably fulfil the following inequality (I-12):

$$Dx \geq (1/3) \times LW \qquad (I\text{-}12).$$

This preferably further allows to secure mass transport along the interface BPP-PTL.

The land width (LW) of the bipolar plate may be from 0.5 to 3.0 mm, preferably from 0.7 mm to 2.0 mm, most preferably from 1.0 mm to 1.5 mm. The channel width (CW) of the bipolar plate may be from 0.7 to 3.0 mm, preferably from 1.0 mm to 2.7 mm, most preferably from 1.0 mm to 2.5 mm.

The bipolar plate can be combined with the laminate, for example, by bonding or welding. Preferably, the perforated layer, which is opposite of the first perforated layer, is welded to the bipolar plate. After welding, a single component BPP+PTL is obtained and ohmic resistance at an interlayer can preferably be significantly reduced/avoided. Moreover, it is preferably possible to eliminate the need for protective coatings at the BPP/PTL interface.

A further aspect of the present invention relates to an electrochemical apparatus comprising the laminate according to the present invention or the assembly according to the present invention. The above definitions and embodiments apply analogously for this aspect of the present invention. The following definitions and embodiments apply likewise analogously for the other aspects of the invention.

The electrochemical apparatus may for example be a proton exchange membrane water electrolyzer (PEMWE), an anion exchange membrane water electrolyzer (AEMWE), and alkaline water electrolyzer (ALKWE). The other components of apparatuses are known in the art. For example, there can be applied, bipolar plates, porous transport layer anodes, porous transport layer cathodes, anode catalyst layers, cathode catalyst layers, and proton exchange membranes. The laminate according to the present invention can be applied as porous transport layer, preferably as anodic porous transport layer, possibly together with a bipolar plate in the assembly according to the present invention. A possible PEMWE is depicted in Figure 1. The first perforated layer (11) is preferably contacting the anode catalyst layer.

The dimensions as defined by the above inequalities preferably guarantee on the one hand proper water and gas transport between the channel of the BPP and the catalyst layer allowing for the whole CL surface to be exposed to water flow. On the other hand, the mechanical stability of the design is preferably enough to withstand the pressure conditions during operation while serving as a reinforcement that helps stabilize the membrane subjected at high differential pressures. Due to the general ambition of applying thinner polymeric membranes ($\leq 50 \ \mu m$) the geometry of the top layer/ first perforated layer (11) can become critical in providing sufficient mechanical stability to the CCM. This is one of the important factors that together with the active contact area can determine the preference of small openings for the design of the top layer/ first perforated layer.

The leading dimension in the laminate of the present invention is the first maximum opening dimension D1, while the rest of the dimensions of each layer support the criteria of mass transport and mechanical stability mentioned above. The type of membrane employed will determine the optimal maximum opening dimension. For instance, when using very thin membranes such as Nafion 212 with an average thickness of 50 $\mu$m, the maximum opening dimension is preferably closer to 50 $\mu$m. Moreover, it is preferable to maximize the ratio D1:T1 for improved mass transport.

Furthermore, it is preferably possible to maximize the active area (or diffusion free contact area) by avoiding distortions in the catalyst layer and creating a homogeneous pressure distribution. This can for example be achieved by creating very large free contact area by decreasing the maximum opening dimension at the top layer and limiting the open porosity to 50 %. Moreover, mass transport along the bulk of the multilayered PTL is preferably optimized by avoiding areas from obstruction due to poor gas and water transport at the BPP/PTL interface. Improved mass transport can for example be achieved by increasing the maximum opening dimension and open porosity at the layer in direct contact with the flow field of the BPP.

Fig. 1: Cross section of a single cell PEMWE

Fig. 2: Cross-section of a typical bipolar plate indicating the main parameters that define the geometry of the flow field, such as channel and land width as well as channel depth.

Fig. 3: 3D representation of the same bipolar plate with two different 2D Ti PTLs. Left, 2D PTL with opening diameter of 100 $\mu$m and open porosity 40 %. Right, 2D PTL with opening diameter of 300 $\mu$m and open porosity of 60 %.

Fig. 4: Top view schematic representation of the distribution of catalytic domains at the interface between the 2D **PTL** and the catalyst layer.

Fig. 5: Left: 3D image representation of a bipolar plate with a multilayered 2D PTL. Right: higher magnification of the same multilayered 2D PTL.

Fig. 6: Cross-section of integrated PTL/BPP single component by resistance welding. Note that in this exemplary illustration a 2-layer **PTL** is selected to match the land and channel dimensions of the BPP.

Fig. 7: Cross sectional illustration of two different **PTL** top layers in direct contact with the catalyst layer. Left: thick top layer leading to gas accumulation and blockage of openings. Right: thin top layer enhancing gas and water diffusion.

Fig. 8: Left: detailed geometry of a perforated sheet used as top layer in a multilayered **2D PTL.** Right: cross-sectional sketch of a three-layer **PTL** with the main geometry descriptors.

Figs. 9 and 10: Laminate, wherein bottom layer long opening is perpendicular to middle layer long opening.

## Claims

1. Laminate comprising a first perforated layer (11) and a second perforated layer (12) on the first perforated layer (11), wherein each of the first perforated layer (11) and the second perforated layer (12) has a two-dimensional periodic structure of openings, and a first thickness (T1), a first maximum opening dimension (D1), and a first opening distance (S1) of the first perforated layer (11) and a second maximum opening dimension (D2) and a second opening distance (S2) of the second perforated layer (12) fulfil the following inequalities (1-1) to (I-5),

$$D1 \geq T1 \qquad (I\text{-}1);$$

$$D1 \geq S2 \qquad (I\text{-}2);$$

$$S1 \leq (2/3) \times D1 \qquad (I\text{-}3);$$

$$D2 \geq 5 \times D1 \qquad (I\text{-}4);$$

and

$$S2 \leq (1/3) \times D2 \qquad (I\text{-}5).$$

2. The laminate according to claim 1, wherein the first thickness (T1) is from 25 $\mu$m to 200 $\mu$m and a second thickness (T2) of the second perforated layer (12) is from 50 $\mu$m to 250 $\mu$m.

3. The laminate according to claim 1 or 2, wherein the first perforated layer (11) has a first open porosity (O1) of from 30% to 70% and the second perforated layer (12) has a second open porosity (O2) of from 50% to 90%.

4. The laminate according to any one of claims 1 to 3, wherein the first maximum opening dimension (D1) is from 30 $\mu$m to 300 $\mu$m and the second maximum opening dimension (D2) is from 400 $\mu$m to 1500 $\mu$m.

5. The laminate according to any one of claims 1 to 4, wherein the first opening distance (S1) is from 20 $\mu$m to 100 $\mu$m and the second opening distance (S2) is from 30 $\mu$m to 120 $\mu$m.

6. The laminate according to any one of claims 1 to 5, further comprising a third perforated layer (13) on the second perforated layer (12), wherein the third perforated layer (13) has a two-dimensional periodic structure of openings, and the second maximum opening dimension (D2) of the second perforated layer (12) and a third maximum opening dimension (D3) and a third opening distance (S3) of the third perforated layer (13) fulfil the following inequalities (I-6) to (I-8),

$$D2 \geq 3 \times S3 \qquad (I\text{-}6);$$

$$S3 \leq (1/4) \times D3 \qquad (I\text{-}7);$$

$$D3 \geq 1.5 \times D2 \qquad (I\text{-}8).$$

7. The laminate according to claim 6, wherein the laminate comprises more than three perforated layers, wherein the further perforated layers are consecutively provided on the third perforated layer and each have a two-dimensional periodic structure of openings, and wherein the following inequalities (I-9) to (I-11) are fulfilled:

$$D(n\text{-}1) \geq 3 \times Sn \qquad (I\text{-}9);$$

$$Sn \leq (1/4) \times Dn \qquad (I\text{-}10);$$

and

$$Dn \geq 1.5 \times D(n\text{-}1) \qquad (I\text{-}11),$$

wherein n represents the total number of perforated layers, D(n-1) represents the maximum opening dimension of the (n-1)$^{th}$ perforated layer, Dn represents the maximum opening dimension of n$^{th}$ perforated layer, and Sn represents the opening distance of n$^{th}$ perforated layer.

8. The laminate according to claim 6 or 7, wherein a third thickness (T3) of the third perforated layer (13) is from 100 $\mu$m to 500 $\mu$m and the thicknesses of the optional further perforated layers are each independently from 100 $\mu$m to 500 $\mu$m.

9. The laminate according to any one of claims 6 to 8 wherein the third perforated layer (13) has a third open porosity (O3) of 60% to 90% and the open porosities of the optional further perforated layers are each independently from 70% to 90%.

10. The laminate according to any one of claims 6 to 9, wherein the third maximum opening dimension (D3) is from 600 $\mu$m to 2300 $\mu$m and the maximum opening dimensions of the optional further perforated layers are each independently from 600 $\mu$m to 2300 $\mu$m.

11. The laminate according to any one of claims 6 to 10, wherein the third opening distance (S3) is from 100 $\mu$m to 500 $\mu$m and the opening distances of the optional further perforated layers are each independently from 100 $\mu$m to 500 $\mu$m.

12. The laminate according to any one of claims 1 to 11, wherein the perforated layers are selected from perforated titanium sheets, perforated stainless steel sheets, and perforated nickel-based sheets.

13. Assembly comprising a bipolar plate and the laminate according to any one of claims 1 to 12 on the bipolar plate, wherein the perforated layer, which is opposite of the first perforated layer, is contacting the bipolar plate.

14. The assembly according to claim 13, wherein the perforated layer, which is opposite of the first perforated layer, is welded to the bipolar plate.

15. The assembly according to claim 13 or 14, wherein a land width (LW) of the bipolar plate and the maximum opening dimension (Dx) of the perforated layer, which is opposite of the first perforated layer, fulfil the following inequality (I-12)

$$Dx \geq (1/3) \times LW \qquad (I\text{-}12).$$

16. The assembly according to any one of claims 13 to 15, wherein a land width (LW) of the bipolar plate is from 0.5 to 3.0 mm and a channel width (CW) of the bipolar plate is from 1.0 to 3.0 mm.

17. Electrochemical apparatus comprising the laminate according to any one of claims 1 to 12 or the assembly according to any one of claims 13 to 16.

**Patentansprüche**

1. Laminat, umfassend eine erste perforierte Schicht (11) und eine zweite perforierte Schicht (12) auf der ersten perforierten Schicht (11), wobei die erste perforierte Schicht (11) und die zweite perforierte Schicht (12) jeweils eine zweidimensionale periodische Struktur von Öffnungen aufweisen, und

eine erste Dicke (T1), eine erste maximale Öffnungsdimension (D1) und ein erster Öffnungsabstand (S1) der ersten perforierten Schicht (11) sowie eine zweite maximale Öffnungsdimension (D2) und ein zweiter Öffnungsabstand (S2) der zweiten perforierten Schicht (12) die folgenden Ungleichungen (I-1) bis (I-5) Erfüllen,

$$D1 \geq T1 \qquad (I\text{-}1);$$

$$D1 \geq S2 \qquad (I\text{-}2);$$

$$S1 \leq (2/3) \times D1 \qquad (I\text{-}3);$$

$$D2 \geq 5 \times D1 \qquad (I\text{-}4);$$

und

$$S2 \leq (1/3) \times D2 \qquad (I\text{-}5).$$

2. Laminat nach Anspruch 1, wobei die erste Dicke (T1) von 25 $\mu$m bis 200 $\mu$m ist und eine zweite Dicke (T2) der zweiten perforierten Schicht (12) von 50 $\mu$m bis 250 $\mu$m ist.

3. Laminat nach Anspruch 1 oder 2, wobei die erste perforierte Schicht (11) eine erste offene Porosität (O1) von 30 % bis 70 % und die zweite perforierte Schicht (12) eine zweite offene Porosität (O2) von 50 % bis 90 % aufweist.

4. Laminat nach einem der Ansprüche 1 bis 3, wobei die erste maximale Öffnungsdimension (D1) von 30 $\mu$m bis 300 $\mu$m ist und die zweite maximale Öffnungsdimension (D2) von 400 $\mu$m bis 1500 $\mu$m ist.

5. Laminat nach einem der Ansprüche 1 bis 4, wobei der erste Öffnungsabstand (S1) von 20 $\mu$m bis 100 $\mu$m ist und der zweite Öffnungsabstand (S2) von 30 $\mu$m bis 120 $\mu$m ist.

6. Laminat nach einem der Ansprüche 1 bis 5, weiter umfassend eine dritte perforierte Schicht (13) auf der zweiten perforierten Schicht (12), wobei die dritte perforierte Schicht (13) eine zweidimensionale periodische Struktur von Öffnungen aufweist, und die zweite maximale Öffnungsdimension (D2) der zweiten perforierten Schicht (12) und eine dritte maximale Öffnungsdimension (D3) und ein dritter Öffnungsabstand (S3) der dritten perforierten Schicht (13) die folgenden Ungleichungen (I-6) bis (I-8) erfüllen,

$$D2 \geq 3 \times S3 \qquad (I\text{-}6);$$

$$S3 \leq (1/4) \times D3 \qquad (I\text{-}7);$$

$$D3 \geq 1,5 \times D2 \qquad (I\text{-}8).$$

7. Laminat nach Anspruch 6, wobei das Laminat mehr als drei perforierte Schichten umfasst, wobei die weiteren perforierten Schichten nacheinander auf der dritten perforierten Schicht angeordnet sind und jeweils eine zweidimensionale periodische Öffnungsstruktur aufweisen, und wobei die folgenden Ungleichungen (I-9) bis (1-11) erfüllt sind:

$$D(n\text{-}1) \geq 3 \times Sn \qquad (I\text{-}9);$$

$$Sn \leq (1/4) \times Dn \qquad (I\text{-}10);$$

und

$$Dn \geq 1,5 \times D(n\text{-}1) \qquad (I\text{-}11),$$

worin n die Gesamtzahl der perforierten Schichten darstellt, D(n-1) die maximale Öffnungsdimension der (n-1)$^{\text{ten}}$ perforierten Schicht darstellt, Dn die maximale Öffnungsdimension der n$^{\text{ten}}$ perforierten Schicht darstellt und Sn den Öffnungsabstand der n$^{\text{ten}}$ perforierten Schicht darstellt.

8. Laminat nach Anspruch 6 oder 7, wobei die dritte Dicke (T3) der dritten perforierten Schicht (13) von 100 $\mu$m bis 500 $\mu$m ist und die Dicke der optionalen weiteren perforierten Schichten jeweils unabhängig voneinander 100 $\mu$m bis 500 $\mu$m beträgt.

9. Laminat nach einem der Ansprüche 6 bis 8, wobei die dritte perforierte Schicht (13) eine dritte offene Porosität (O3) von 60 % bis 90 % aufweist und die offenen Porositäten der optionalen weiteren perforierten Schichten jeweils unabhängig voneinander von 70 % bis 90 % sind.

10. Laminat nach einem der Ansprüche 6 bis 9, wobei die dritte maximale Öffnungsdimension (D3) von 600 $\mu$m bis 2300 $\mu$m ist und die maximalen Öffnungsdimensionen der optionalen weiteren perforierten Schichten jeweils unabhängig voneinander von 600 $\mu$m bis 2300 $\mu$m sind.

11. Laminat nach einem der Ansprüche 6 bis 10, wobei der dritte Öffnungsabstand (S3) von 100 $\mu$m bis 500 $\mu$m ist und die Öffnungsdimensionen der optionalen weiteren perforierten Schichten jeweils unabhängig voneinander von 100 $\mu$m bis 500 $\mu$m sind.

12. Laminat nach einem der Ansprüche 1 bis 11, wobei die perforierten Schichten aus perforierten Titanblechen, perforierten Edelstahlblechen und perforierten Blechen auf Nickelbasis ausgewählt sind.

**13.** Anordnung, umfassend eine Bipolarplatte und das Laminat nach einem der Ansprüche 1 bis 12 auf der Bipolarplatte, wobei die perforierte Schicht, die der ersten perforierten Schicht gegenüberliegt, die Bipolarplatte kontaktiert.

**14.** Anordnung nach Anspruch 13, wobei die der ersten perforierten Schicht gegenüberliegende perforierte Schicht mit der Bipolarplatte verschweißt ist.

**15.** Anordnung nach Anspruch 13 oder 14, wobei eine Stegbreite (LW) der Bipolarplatte und die maximale Öffnungsdimension (Dx) der perforierten Schicht, die der ersten perforierten Schicht gegenüberliegt, die folgende Ungleichung (I-12) erfüllen,

$$Dx \geq (1/3) \times LW \qquad (I\text{-}12).$$

**16.** Anordnung nach einem der Ansprüche 13 bis 15, wobei eine Stegbreite (LW) der Bipolarplatte von 0,5 bis 3,0 mm ist und eine Kanalbreite (CW) der Bipolarplatte von 1,0 bis 3,0 mm ist.

**17.** Elektrochemische Vorrichtung, umfassend das Laminat nach einem der Ansprüche 1 bis 12 oder die Anordnung nach einem der Ansprüche 13 bis 16.

**Revendications**

**1.** Stratifié comprenant une première couche perforée (11) et une deuxième couche perforée (12) sur la première couche perforée (11), dans lequel chacune de la première couche perforée (11) et la deuxième couche perforée (12) a une structure périodique bidimensionnelle d'ouvertures, et
une première épaisseur (T1), une première dimension d'ouverture maximale (D1) et une première distance d'ouverture (S1) de la première couche perforée (11), et une deuxième dimension d'ouverture maximale (D2) et une deuxième distance d'ouverture (S2) de la deuxième couche perforée (12) satisfont les inégalités suivantes (I-1) à (I-5),

$$D1 \geq T1 \qquad (I\text{-}1)\,;$$

$$D1 \geq S2 \qquad (I\text{-}2)\,;$$

$$S1 \leq (2/3)\,x\,D1 \qquad (I\text{-}3)\,;$$

$$D2 \geq 5\,x\,D1 \qquad (I\text{-}4)\,;$$

et

$$S2 \leq (1/3)\,x\,D2 \qquad (I\text{-}5).$$

**2.** Stratifié selon la revendication 1, dans lequel la première épaisseur (T1) va de 25 $\mu$m à 200 $\mu$m et une deuxième épaisseur (T2) de la deuxième couche perforée (12) va de 50 $\mu$m à 250 $\mu$m.

**3.** Stratifié selon la revendication 1 ou 2, dans lequel la première couche perforée (11) a une première porosité ouverte (O1) allant de 30 % à 70 % et la deuxième couche perforée (12) a une deuxième porosité ouverte (O2) allant de 50 % à 90 %.

**4.** Stratifié selon l'une quelconque des revendications 1 à 3, dans lequel la première dimension d'ouverture maximale (D1) va de 30 $\mu$m à 300 $\mu$m et la deuxième dimension d'ouverture maximale (D2) va de 400 $\mu$m à 1500 $\mu$m.

**5.** Stratifié selon l'une quelconque des revendications 1 à 4, dans lequel la première distance d'ouverture (S1) va de 20 $\mu$m à 100 $\mu$m et la deuxième distance d'ouverture (S2) va de 30 $\mu$m à 120 $\mu$m.

**6.** Stratifié selon l'une quelconque des revendications 1 à 5, comprenant en outre une troisième couche perforée (13) sur la deuxième couche perforée (12), dans lequel la troisième couche perforée (13) a une structure périodique bidimensionnelle d'ouvertures, et la deuxième dimension d'ouverture maximale (D2) de la deuxième couche perforée (12), et une troisième dimension d'ouverture maximale (D3) et une troisième distance d'ouverture (S3) de la troisième couche perforée (13) satisfont les inégalités suivantes (I-6) à (I-8),

$$D2 \geq 3\,x\,S3 \qquad (I\text{-}6)\,;$$

$$S3 \leq (1/4)\,x\,D3 \qquad (I\text{-}7)\,;$$

$$D3 \geq 1{,}5\,x\,D2 \qquad (I\text{-}8).$$

**7.** Stratifié selon la revendication 6, dans lequel le stratifié comprend plus de trois couches perforées, dans lequel les autres couches perforées sont fournies consécutivement sur la troisième couche perforée et ont chacune une structure périodique bidimensionnelle d'ouvertures, et dans lequel les inégalités suivantes (1-9) à (1-11) sont satisfaites :

$$D(n-1) \geq 3 \text{ x } Sn \qquad (I\text{-}9) \text{ ;}$$

$$Sn \leq (1/4) \text{ x } Dn \qquad (I\text{-}10) \text{ ;}$$

et

$$Dn \geq 1,5 \text{ x } D(n-1) \qquad (I\text{-}11),$$

dans lesquelles n représente le nombre total de couches perforées, D(n-1) représente la dimension d'ouverture maximale de la (n-1)$^e$ couche perforée, Dn représente la dimension d'ouverture maximale de la n$^e$ couche perforée, et Sn représente la distance d'ouverture de la n$^e$ couche perforée.

8. Stratifié selon la revendication 6 ou 7, dans lequel une troisième épaisseur (T3) de la troisième couche perforée (13) va de 100 $\mu$m à 500 $\mu$m et les épaisseurs des autres couches perforées optionnelles vont chacune indépendamment de 100 $\mu$m à 500 $\mu$m.

9. Stratifié selon l'une quelconque des revendications 6 à 8, dans lequel la troisième couche perforée (13) a une troisième porosité ouverte (O3) de 60 % à 90 % et les porosités ouvertes des autres couches perforées optionnelles vont chacune indépendamment de 70 % à 90 %.

10. Stratifié selon l'une quelconque des revendications 6 à 9, dans lequel la troisième dimension d'ouverture maximale (D3) va de 600 $\mu$m à 2300 $\mu$m et les dimensions d'ouverture maximale des autres couches perforées optionnelles vont chacune indépendamment de 600 $\mu$m à 2300 $\mu$m.

11. Stratifié selon l'une quelconque des revendications 6 à 10, dans lequel la troisième distance d'ouverture (S3) va de 100 $\mu$m à 500 $\mu$m et les distances d'ouverture des autres couches perforées optionnelles vont chacune indépendamment de 100 $\mu$m à 500 $\mu$m.

12. Stratifié selon l'une quelconque des revendications 1 à 11, dans lequel les couches perforées sont sélectionnées parmi des feuilles de titane perforées, des feuilles d'acier inoxydable perforées et des feuilles à base de nickel perforées.

13. Ensemble comprenant une plaque bipolaire et le stratifié selon l'une quelconque des revendications 1 à 12 sur la plaque bipolaire, dans lequel la couche perforée qui est à l'opposé de la première couche perforée vient en contact avec la plaque bipolaire.

14. Ensemble selon la revendication 13, dans lequel la couche perforée qui est à l'opposé de la première couche perforée est soudée à la plaque bipolaire.

15. Ensemble selon la revendication 13 ou 14, dans lequel une largeur terrestre (LW) de la plaque bipolaire et la dimension d'ouverture maximale (Dx) de la couche perforée qui est à l'opposé de la première couche perforée satisfont l'inégalité suivante (I-12)

$$Dx \geq (1/3) \text{ x } LW \qquad (I\text{-}12).$$

16. Ensemble selon l'une quelconque des revendications 13 à 15, dans lequel une largeur terrestre (LW) de la plaque bipolaire va de 0,5 à 3,0 mm et une largeur de canal (CW) de la plaque bipolaire va de 1,0 à 3,0 mm.

17. Appareil électrochimique comprenant le stratifié selon l'une quelconque des revendications 1 à 12 ou l'ensemble selon l'une quelconque des revendications 13 à 16.

1. Membrane Electrode Assembly (MEA).
2. Bipolar plate (BPP).
3. Porous transport layer anode in titanium (PTL$_a$).
4. Anode catalyst layer (CL$_a$).
5. PFSA Membrane.
6. Cathode catalyst layer (CL$_c$).
7. Porous transport layer cathode in carbon (PTL$_c$).
8. Bipolar plate (BPP)

Figure 1

Figure 2

Figure 3

▲ Diffusion blocked contact area

◎ Diffusion limited contact area

◯ Active contact area

Figure 4

500 µm

Figure 5

Top layer (11)

100 – 150 µm

500 – 600 µm

Bottom layer (12)

Land 1.5 mm

Channel 1.5 mm

Figure 6

Figure 7

Figure 8

Figure 9

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018105115 A1

**Non-patent literature cited in the description**

- **KANG et al.** *Electrochimica Acta*, 2017, vol. 255, 405-416